# EUROPEAN PATENT APPLICATION

(11) **EP 1 521 487 A1**
(43) Date of publication of application: **06.04.2005**
(21) Application number: 04396067.3
(22) Date of filing: 27.09.2004
(51) Int. Cl.: H04Q 7/22, H04L 12/18

(54) **Method, system and radio access network nodes for user data connection re-establishment**

(30) Priority: 30.09.2003 FI 20031412
(71) Applicant: Nokia Corporation, 02150 Espoo (FI)
(72) Inventor: Hurtta, Tuija, 02660 Espoo (FI)
(74) Representative: Simmelvuo, Markku Kalevi

(57) **Abstract**

The invention discloses a method, system and radio access network nodes for establishing a bearer plane for a broadcast or multicast service session in a telecommunication network. In one embodiment, the addresses of all serving GPRS support nodes trying to establish a bearer plane along with the broadcast or multicast service session identifier are stored e.g. on a radio access network node. The radio access network node is e.g. a radio network controller (RNC) of the Universal Terrestrial Radio Access Network (UTRAN). If the bearer plane is, for some reason dropped, based on the stored information one node providing the broadcast or multicast service session is reselected and the bearer plane is re-established with the selected serving GPRS support node for continuing the broadcast or multicast service session.

## Description

### BACKGROUND OF THE INVENTION:

### Field of the Invention:

The invention relates to mobile telecommunication systems. In particular, the invention relates to a novel and improved method and system for re-establishing a user data connection for a broadcast or multicast service session in a telecommunication network.

### Description of the Related Art:

In a Global System for Mobile communications (GSM) architecture one Base Station Controller (BSC) can only connect to one Mobile Switching Center (MSC). Using this GSM based architecture approach, there could be a significant wastage of hardware e.g. where a BSC has 40% of the capacity of an MSC, and therefore, two BSCs being able to connect only to that MSC, leaving 20% of the capacity of the MSC not utilized.

Therefore, the 3^{rd} Generation Partnership Project (3GPP) proposes functionality with which Radio Network Controllers (RNC) and BSCs may be connected to more than one MSC and/or Serving GPRS Support Node (SGSN). This is achieved by specifying more flexible Iu, Gb and A interfaces. This feature, Intra-domain Connection of Radio Access Network Nodes to Multiple Core Network Nodes, is described in more detail e.g. in the 3^{rd} Generation Partnership Project (3GPP) specifications.

There are more inter-MSC/SGSN registration updates (network signaling traffic) when the number of MSCs and SGSNs increases in a network. Therefore, the signaling associated with these inter MSC/SGSN updates cause additional load on Core Network (CN) signaling. The ability to connect RNCs and BSCs to more than one MSC and/or SGSN may reduce this signaling load, and moreover, the ability to provide load sharing between MSCs and SGSNs would further improve the efficiency of hardware utilization.

The Multimedia Broadcast/Multicast Service (MBMS) is a service that provides the capability for broadcast/multicast services. The MBMS stage 1 is described in more detail e.g. in the 3GPP TS 22.146 V6.1.0 (2002-09). In general, the MBMS is a unidirectional point-to-multipoint bearer service in which data is transmitted from a single source entity to multiple recipients.

The broadcast mode is a unidirectional point-to-multipoint transmission of multimedia data (e.g. text, audio, picture, video) from a single source entity to all users in a broadcast service area. The broadcast mode is intended to efficiently use radio/network resources, e.g. data is transmitted over a common radio channel. Multimedia broadcast data transmission should adapt to different RAN capabilities or different radio resource availability, e.g. by reducing the bitrate of the MBMS data.

The multicast mode allows the unidirectional point-to-multipoint transmission of multimedia data (e.g. text, audio, picture, video) from a single source entity to a multicast group in a multicast service area. The multicast mode is intended to efficiently use radio/network resources, e.g. data is transmitted over a common radio channel. In the multicast mode there is the possibility for the network to selectively transmit to cells within the multicast service area, which contain members of a multicast group. Multimedia multicast data transmission should adapt to different RAN capabilities or different radio resource availability, e.g. by reducing the bitrate of the MBMS data.

Unlike in the broadcast mode, the multicast mode generally requires a subscription to the multicast subscription group and then the user joining the corresponding multicast group. The subscription and group joining may be made by the Public Land Mobile Network (PLMN) operator, the user or a third party on their behalf (e.g. company).

In the current 3GPP standards or standard proposals (e.g. 3GPP TR 23.846 1.2.0 (2002-06)), when an RNC detects multiple SGSNs requesting to establish an MBMS RAB for the same MBMS service session, the RNC establishes an MBMS RAB with one or more of these SGSNs. The RNC selects one of the MBMS RABs as the source for the MBMS data. The selection may be random or according to one or more metrics, such as QoS abilities, quality of transfer link, capability of transfer link, etc. Any data that is received on the unselected MBMS RABs will be dropped by the RNC. During MBMS data transmission, the RNC may change the selected MBMS RAB to achieve better QoS, etc. If some problems occur with the selected MBMS RAB or the selected MBMS RAB is released or broken, then based on the requirement of the capacity of the interface or some other rationale, one of the other MBMS RABs can be selected immediately.

Another alternative is that a default SGSN is used if Intra Domain Connection of RAN Nodes to Multiple CN Nodes is used in a network. In this alternative, only one MBMS RAB is accepted from one of the SGSNs, and therefore, MBMS RABs from other SGSNs (for the same MBMS service session) will be rejected. All SGSNs receive the same MBMS data but only one SGSN forwards the MBMS data to the RNC. Other SGSNs drop the MBMS data.

There is, however, a question to be solved in the aforementioned alternative solution. It is possible that the MBMS RAB is at some point dropped (e.g. because the MBMS context is dropped in the core network, e.g. in the SGSN or in the Gateway GPRS Support Node (GGSN), or due to an SGSN failure). In this situation, there is no MBMS RAB on which to carry the MBMS data to the RNC. For a while, no MBMS data is sent to the UEs. The problem is how the UEs can be provided with the MBMS data again.

### SUMMARY OF THE INVENTION:

According to a first aspect of the invention, there is provided a method for establishing a bearer plane connection for a broadcast or multicast service session in a mobile telecommunication network comprising at least a first network node initiating a bearer plane establishment and a second network node receiving the bearer plane establishment from the first network node. The method comprises establishing a bearer plane connection between a first network node and a second network node for a broadcast or multicast service session, detecting a failure an established bearer plane, reselecting a second network node providing the broadcast or multicast service session, and re-establishing the bearer plane connection with a selected second network node for continuing the broadcast or multicast service session.

In one embodiment of the invention the method further comprising receiving a request from at least one second network node for establishing the bearer plane for the broadcast or multicast service session, and reselecting one of the at least one second network node for establishing the bearer plane. In another embodiment, the method further comprises the step of reselecting a default second network node for establishing a bearer plane connection.

In one embodiment of the invention the method further comprising storing addresses of the at least one second network node trying to establish the bearer plane for the broadcast or multicast service session. In another embodiment the method further comprising storing a broadcast or multicast service session identifier with the addresses of the at least one second network node trying to establish the bearer plane for the broadcast or multicast service session. In one embodiment of the invention, the addresses of the at least one second network node together with the broadcast or multicast service session identifier are stored in the first network node.

In one embodiment of the invention, the broadcast or multicast service session identifier comprises an IP multicast address.

In one embodiment of the invention the method further comprising sending an MBMS radio access bearer re-establishment request to the selected second network node for re-establishing a radio access bearer, sending an MBMS radio access bearer assignment request to the first network node with the second network node in response to the MBMS radio access bearer re-establishment request, and sending an MBMS radio access bearer assignment response to the second network node with the first network node.

In one embodiment of the invention the method further comprising sending an MBMS radio access bearer assignment request to the selected second network node for re-establishing the radio access bearer, and sending an MBMS radio access bearer assignment response to the first network node with the second network node in response to the MBMS radio access bearer re-establishment request.

In one embodiment of the invention, the first network node comprises one of a radio network controller of the UTRAN, a base station controller of the GERAN, a base station system of the GSM or an IP base station of the IP RAN and the second network node comprises a serving GPRS support node.

In one embodiment of the invention, the first network node is a serving GPRS support node and the second network node is a gateway GPRS support node.

According to a second aspect of the invention, there is provided a system for establishing a bearer plane for a broadcast or multicast service session in a mobile telecommunication network comprising at least a first network node initiating a bearer plane establishment and a second network node receiving the bearer plane establishment from the first network node, the system further comprising establishing means for establishing a bearer plane between a first network node and a second network node for a broadcast or multicast service session, detecting means for detecting a failure with an established bearer plane, reselecting means for reselecting a second network node providing the broadcast or multicast service session, and re-establishing means for re-establishing the bearer plane with a selected second network node for continuing the broadcast or multicast service session.

In one embodiment of the invention, the system further comprises receiving means for receiving a request from at least one second network node for establishing the bearer plane for the broadcast or multicast service session, and wherein the reselecting means are configured to reselect one of at least one the second network node.

In one embodiment of the invention, the reselecting means are configured to select a default secoind network node.

In one embodiment of the invention, the system further comprises storing means for storing addresses of the second network nodes trying to establish the bearer plane for the broadcast or multicast service session. In another embodiment, the storing means are configured to store a broadcast or multicast service session identifier with the addresses of the second network nodes trying to establish the bearer plane for the broadcast or multicast service session.

In one embodiment of the invention, the broadcast or multicast service session identifier comprises an IP multicast address.

In one embodiment of the invention, the re-establishing means are configured to send an MBMS radio access bearer re-establishment request to the selected second network node for re-establishing a radio access bearer.

In one embodiment of the invention, the re-establishing means are configured to send an MBMS radio access bearer assignment request to the selected second network node for re-establishing the radio access bearer.

In one embodiment of the invention, the first network node comprises one of a radio network controller of the UTRAN, a base station controller of the GERAN, a base station system of the GSM or an IP base station of the IP RAN and the second network node comprises a serving GPRS support node.

In one embodiment of the invention, the first network node comprises a serving GPRS support node and the second network node comprises a gateway GPRS support node.

According to a third aspect of the invention, there is provided a radio access network node for establishing a bearer plane for a broadcast or multicast service session in a mobile telecommunication network,
wherein the radio access network node is connected to at least one serving GPRS support node, the radio access network node comprising establishing means for establishing a bearer plane between a radio access network node and a serving GPRS support node for a broadcast or multicast service session, detecting means for detecting a failure with an established bearer plane, reselecting means for reselecting serving GPRS support nodes providing the broadcast or multicast service session, and re-establishing means for re-establishing the bearer plane with a selected serving GPRS support node for continuing the broadcast or multicast service session.

In one embodiment of the invention, the radio access network node further comprises receiving means for receiving a request from at least one serving GPRS support node for establishing the bearer plane for the broadcast or multicast service session, and wherein the reselecting means are configured to reselect one of the serving GPRS support nodes.

In one embodiment of the invention, the reselecting means for selecting are configured to select a default serving GPRS support node.

In one embodiment of the invention, the radio access network node further comprises storing means for storing addresses of the serving GPRS support nodes trying to establish the bearer plane for the broadcast or multicast service session. In another embodiment, the storing means are configured to store a broadcast or multicast service session identifier with the addresses of the serving GPRS support nodes trying to establish the bearer plane for the broadcast or multicast service session.

In one embodiment of the invention, the broadcast or multicast service session identifier comprises an IP multicast address.

In one embodiment of the invention, re-establishing means are configured to send an MBMS radio access bearer re-establishment request to the selected serving GPRS support node for re-establishing a radio access bearer.

In one embodiment of the invention, wherein re-establishing means are configured to send an MBMS radio access bearer assignment request to the selected serving GPRS support node for re-establishing a radio access bearer.

In one embodiment of the invention, the radio access network node is one of a radio network controller of the UTRAN, a base station controller of the GERAN, a base station system of the GSM or an IP base station of the IP RAN.

According to a fourth aspect of the invention, there is provided a serving GPRS support node for establishing a bearer plane for a broadcast or multicast service session in a mobile telecommunication network, wherein the serving GPRS support node is connected to at least one gateway GPRS support node, the serving GPRS support node comprising establishing means for establishing a bearer plane between a serving GPRS support node and a gateway GPRS support node for a broadcast or multicast service session, detecting means for detecting a failure with an established bearer plane, reselecting means for reselecting gateway GPRS support nodes providing the broadcast or multicast service session, and re-establishing means for re-establishing the bearer plane with a selected gateway GPRS support node for continuing the broadcast or multicast service session.

In one embodiment of the invention, the serving GPRS support node further comprises receiving means for receiving a request from at least one gateway GPRS support node for establishing the bearer plane for the broadcast or multicast service session, and wherein the reselecting means are configured to reselect one of the gateway GPRS support nodes.

In one embodiment of the invention, the reselecting means for selecting are configured to select a default gateway GPRS support node.

In one embodiment of the invention, the serving GPRS support node further comprises storing means for storing addresses of the gateway GPRS support nodes trying to establish the bearer plane for the broadcast or multicast service session. In another embodiment, the storing means are configured to store a broadcast or multicast service session identifier with the addresses of the gateway GPRS support nodes trying to establish the bearer plane for the broadcast or multicast service session.

In one embodiment of the invention, the broadcast or multicast service session identifier comprises an IP multicast address.

In one embodiment of the invention, the re-establishing means are configured to send an MBMS radio access bearer re-establishment request to the selected gateway GPRS support node for re-establishing the bearer plane.

In one embodiment of the invention, the re-establishing means are configured to send an MBMS radio access bearer assignment request to the selected gateway GPRS support node for re-establishing the bearer plane.

The invention has several advantages over the prior-art solutions. The invention discloses a resource effective solution for establishing and re-establishing user data connections, e.g. radio access bearers. Only one radio access bearer is accepted from a serving GPRS support node. If the radio access bearer fails, it is easy and quick to establish a new radio access bearer based on the stored SGSN address/MBMS service session identifier information.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**Fig 1a** is a block diagram illustrating an embodiment of a system in accordance with the invention;
**Fig 1b** is a block diagram illustrating another embodiment of a system in accordance with the invention;
**Fig 2a** is a flow diagram illustrating messages between a radio access network node and a serving GPRS support node in accordance with the invention;
**Fig 2b** is a flow diagram illustrating messages between a serving GPRS support node and a gateway GPRS support node in accordance with the invention;
**Fig 3a** is flow diagram illustrating messages between a radio access network node and a serving GPRS support node in accordance with the invention; and
**Fig 3b** is flow diagram illustrating messages between a serving GPRS support node and a gateway GPRS support node in accordance with the invention.

### DETAILED DESCRIPTION OF THE PREFERRED EMBODIMENTS:

Reference will now be made in detail to the embodiments of the invention, examples of which are illustrated in the accompanying drawings.

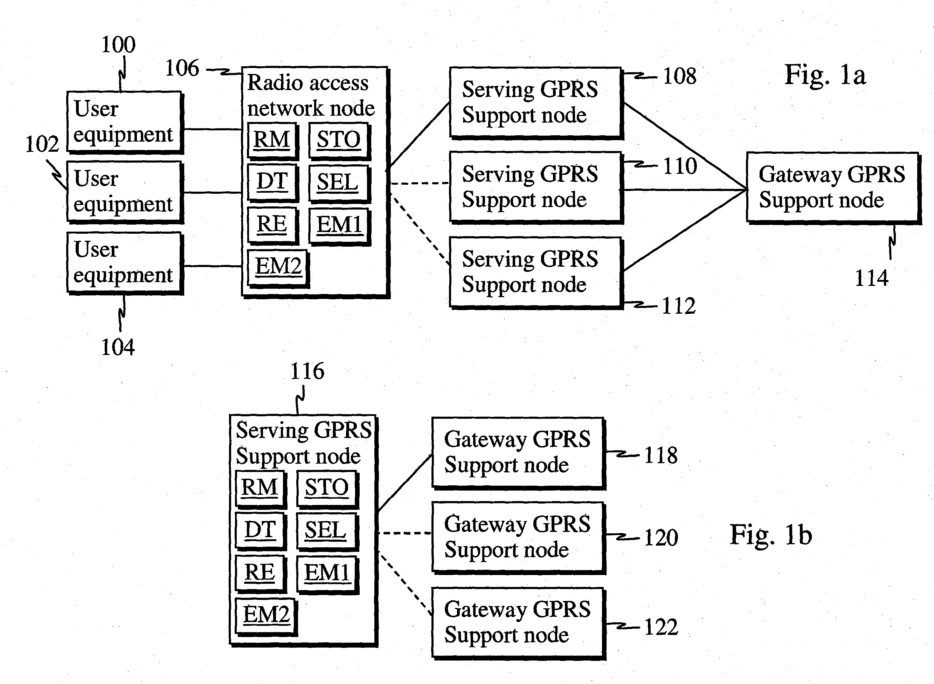

Figure 1a is a block diagram illustrating an embodiment of a system in accordance with the invention. The system comprises a gateway GPRS support node 114 that has a connection to each serving GPRS support node 108, 110, 112. Each serving GPRS support node 108, 110, 112 is able to establish a user data connection to a radio access network node 106. Furthermore, the system comprises user equipment 100, 102, 104 connected to the network. The radio access network node 106 is in one embodiment a radio network controller of the UTRAN but is may also be e.g. a base station controller of the GERAN or a base station system of the GSM or an IP base station of the IP RAN. The user data connection is e.g. a radio access bearer.

The exemplary system depicted in Figure 1a is a system providing Multimedia Broadcast/Multicast Service (MBMS). The gateway GPRS support node 114 terminates the MBMS GTP (GTP, GPRS Tunneling Protocol) tunnels from the serving GPRS support nodes 108, 110, 112 and links these tunnels via IP multicast with an MBMS data source.

In Figure 1a, the user data connection (radio access bearer) has been established between the radio access network node 106 and serving GPRS support node 108. The dotted line represents establishing requests from serving GPRS support nodes 110 and 112, the requests however being rejected by the radio access network node 106.

The radio access network node 106 of Figure 1a further comprises establishing means EM1 for establishing a user data connection with a serving GPRS support node for a broadcast or multicast service session, detecting means DT for detecting a failure with the user data connection provided by the serving GPRS support node, reselecting means RE for reselecting a serving GPRS support node providing the broadcast or multicast service session, and re-establishing means EM2 for re-establishing the user data connection with the selected serving GPRS support node for continuing the broadcast or multicast service session.

In the example of Figure 1a, the radio access network node 106 receives request from at least one serving GPRS support node for establishing a user data connection for a broadcast or multicast service session. Therefore, there are provided receiving means RM for receiving a request from several serving GPRS support nodes for establishing a user data connection for a broadcast or multicast service session and selecting means SEL for selecting one of the serving GPRS support nodes.

Furthermore, the radio access network node 106 may comprise storing means STO for storing the broadcast or multicast service session identifier with the addresses of the serving GPRS support nodes trying to establish the user data connection for the broadcast or multicast service session are arranged in the radio access network node 106. This information could be stored e.g. in the form of:
- MBMS Service Session Id (e.g. IP multicast address)
- SGSN1 Address (default)
- SGSN2 Address
- SGSNn Address.

The connection may be established with any selected SGSN node. If there does not exist any specific rules for selecting the SGSN, the default SGSN node is selected.

The aforementioned means are preferably implemented by means of software and/or hardware, and therefore, are not described in more detail.

Figure 1b is a block diagram illustrating an embodiment of a system in accordance with the invention. The system comprises a serving GPRS support node 114 that may have a connection to several gateway GPRS support nodes 118, 120, 122. Each gateway GPRS support node 118, 120, 122 is able to establish a user data connection to the serving GPRS support node 116.

The exemplary system depicted in Figure 1 is a system providing Multimedia Broadcast/Multicast Service (MBMS). The gateway GPRS support nodes 118, 120, 122 terminate the MBMS GTP tunnels from the serving GPRS support node 116 and links these tunnels via IP multicast with an MBMS data source.

In Figure 1b, the user data connection (radio access bearer) has been established between the serving GPRS support node 116 and the gateway GPRS support node 188. The dotted line represents establishing requests from gateway GPRS support nodes 120, 132, the requests however being rejected by the serving GPRS support node 116.

The serving GPRS support node 116 of Figure 1b further comprises establishing means EM1 for establishing a user data connection with a gateway GPRS support node for a broadcast or multicast service session, detecting means DT for detecting a failure with the user data connection provided by the gateway GPRS support node, reselecting means RE for reselecting a gateway GPRS support node providing the broadcast or multicast service session, and re-establishing means EM2 for re-establishing the user data connection with the selected gateway GPRS support node for continuing the broadcast or multicast service session.

In the example of Figure 1, the serving GPRS support node 116 receives request from at least one gateway GPRS support node for establishing a user data connection for a broadcast or multicast service session. Therefore, there are provided receiving means RM for receiving a request from several gateway GPRS support nodes for establishing a user data connection for a broadcast or multicast service session and selecting means SEL for selecting one of the gateway GPRS support nodes.

Furthermore, the serving GPRS support node 116 may comprise storing means STO for storing the broadcast or multicast service session identifier with the addresses of the gateway GPRS support nodes trying to establish the user data connection for the broadcast or multicast service session are arranged in the serving GPRS support node 116. This information could be stored e.g. in the form of:
- MBMS Service Session Id (e.g. IP multicast address)
- Address of the serving GPRS support node 118 (default)
- Address of the serving GPRS support node 120
- Address of the serving GPRS support node 122.

The connection may be established with any selected GGSN node. If there does not exist any specific rules for selecting the GGSN, the default GGSN node is selected.

The aforementioned means are preferably implemented by means of software and/or hardware, and therefore, are not described in more detail.

In one embodiment of the invention, another node other than the radio access network node 108 or serving GPRS support node 116 requests the MBMS RAB re-establishment. The MBMS RAB re-establishment can alternatively be initiated e.g. by operation and maintenance. Therefore, detecting means DT, reselecting means RE and re-establishing means EM2 may reside in a network component other than the radio access network node 106 or serving GPRS support node 116. An SGSN of GGSN serving the same area with other SGSNs or GGSNs can also send the MBMS RAB Assignment Request without a request from the radio access network node 106 or serving GPRS support node 116. This is feasible e.g. in a case when the serving GPRS support node or gateway GPRS support node can recover from dropping the MBMS RAB and possibly MBMS context itself.

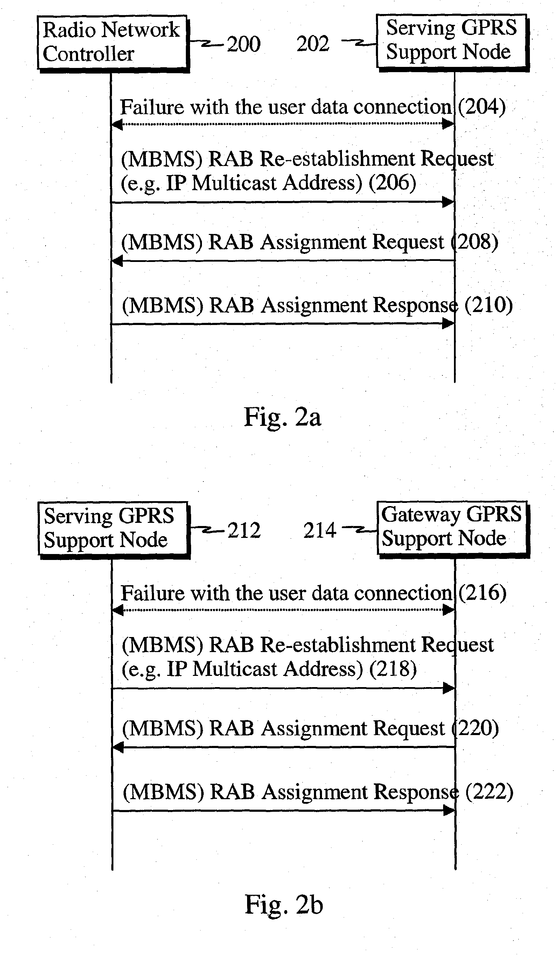

Figure 2a is a flow diagram illustrating messaging between a radio access network node 200 and a serving GPRS support node 202 in accordance with the invention. The radio access network node 200 is e.g. a radio network controller. The radio network controller 200 notices a failure situation e.g. when it receives an MBMS RAB Assignment Request (release RAB) from the default serving GPRS support node 202, or in case of Iu-Flex, when the default serving GPRS support node is dropped from the table of available serving GPRS support nodes, or when it receives a Reset message from the default serving GPRS support node.

If the MBMS radio access bearer is dropped, the radio network controller 200 should also know that the MBMS service session still continues (i.e. the MBMS radio access bearer is not dropped because the MBMS data transmission is stopped). It is then required that the serving GPRS support node 202 informs the radio network controller ND in MBMS RAB Assignment Request (release RAB) what is the reason for dropping the MBMS RAB, e.g. failure situation 204 or inactivity (e.g. MBMS data transmission stopped). If the MBMS radio access bearer is dropped, the radio network controller 200 requests MBMS radio access bearer re-establishment from the same serving GPRS support node or from another serving GPRS support node listed in the table for the MBMS service session (206). The re-establishment request comprises e.g. the IP multicast address of the MBMS service session. The serving GPRS support node 202 sends an MBMS RAB Assignment Request (208) to the radio network controller 200. In response to the message, the radio network controller 200 sends an MBMS RAB Assignment Response (210) to the serving GPRS support node SGSN that establishes the MBMS RAB between the radio network controller ND and the serving GPRS support node SGSN.

It is noted that also other nodes than the radio network controller 200 may request the radio access bearer re-establishment. The MBMS RAB re-establishment can alternatively be initiated e.g. by operation and maintenance. A serving GPRS support node serving the same area with other SGSNs may also send an MBMS RAB Assignment Request without a request from the radio network controller 200 or operation and maintenance.

The invention is described in Figure 2a by means of a radio network controller. In another embodiments, depending on the networks in which the invention is used, the radio network controller may be replaced e.g. with a base station controller of the GERAN or BSS or an IP base station of the IP RAN.

Figure 2b is a flow diagram illustrating messaging between a serving GPRS support node 212 and a gateway GPRS support node 214 in accordance with the invention. The serving GPRS support node 212 notices a failure situation (216), e.g. that a radio access bearer, e.g. a GTP tunnel is no longer active.

If the MBMS radio access bearer is dropped, the serving GPRS support node 212 should also know that the MBMS service session still continues (i.e. the MBMS radio access bearer is not dropped because the MBMS data transmission is stopped). It is then required that the gateway GPRS support node 214 informs the serving GPRS support node 212 in MBMS RAB Assignment Request (release RAB) what is the reason for dropping the MBMS RAB, e.g. failure situation 216 or inactivity (e.g. MBMS data transmission stopped). If the MBMS radio access bearer is dropped, the serving GPRS support node 212 requests MBMS radio access bearer (e.g. a GTP tunnel) re-establishment from the same gateway GPRS support node or from another gateway GPRS support node listed in the table for the MBMS service session (218). The re-establishment request comprises e.g. the IP multicast address of the MBMS service session. The gateway GPRS support node 214 sends an MBMS RAB Assignment Request (220) to the serving GPRS support node 212. In response to the message, the gateway GPRS support node 212 sends an MBMS RAB Assignment Response (222) to the serving GPRS support node 212 that establishes the MBMS RAB between the serving GPRS support node 212 and the gateway GPRS support node 214.

It is noted that also other nodes than the serving GPRS support node 212 may request the radio access bearer re-establishment. The MBMS RAB re-establishment can alternatively be initiated e.g. by operation and maintenance. A gateway GPRS support node serving the same area with other GGSNs may also send an MBMS RAB Assignment Request without a request from the serving GPRS support node 212 or operation and maintenance.

The terms and signaling messages referring to a radio access bearer (RAB) in Figure 2b are only exemplary terms and messages. In another embodiment of Figure 2b, a radio access bearer actually refers to a GTP (GPRS tunneling protocol) tunnel, and correspondingly, establishment messages establishing a GTP tunnel refer e.g. to Create PDP (Packet Data Protocol) Context Request and Create PDP Context Response messages.

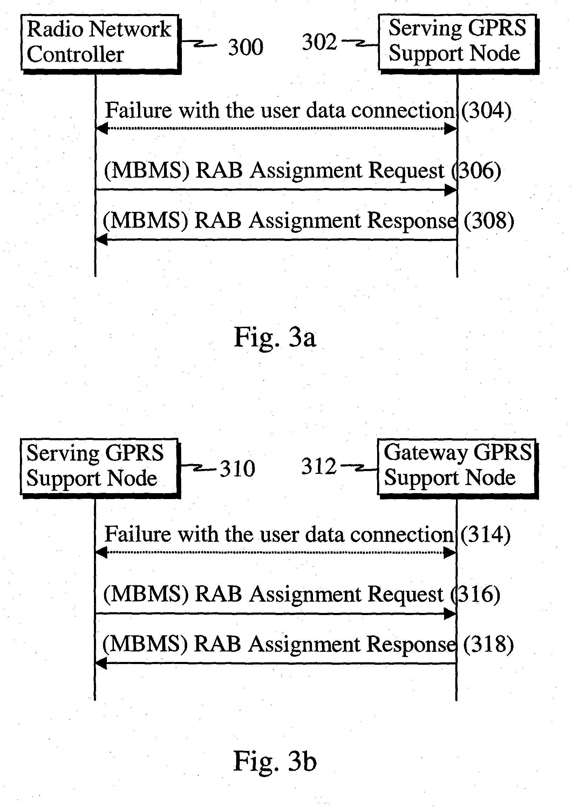

Figure 3a is a flow diagram illustrating messaging between a radio access network node 300 and a serving GPRS support node 302 in accordance with the invention. The radio access network node 300 is e.g. a radio network controller. The radio network controller 300 notices a failure situation (304) e.g. when it receives an MBMS RAB Assignment Request (release RAB) from the default serving GPRS support node 302, or in case of Iu-Flex, when the default serving GPRS support node is dropped from the table of available serving GPRS support nodes, or when it receives a Reset message from the default serving GPRS support node.

If the MBMS radio access bearer is dropped, the radio network controller 300 should also know that the MBMS service session still continues (i.e. the MBMS radio access bearer is not dropped because the MBMS data transmission is stopped). This requires that the serving GPRS support node 302 informs the radio network controller 300 in MBMS RAB Assignment Request (release RAB) what is the reason for dropping the MBMS RAB, e.g. failure situation or inactivity (e.g. MBMS data transmission stopped). If the MBMS radio access bearer is dropped, the radio network controller 300 sends a MBMS RAB assignment request (306) to a default SGSN node or to a selected SGSN node. In response to the message, the serving GPRS support node 302 sends an MBMS RAB Assignment Response (308) to the radio network controller 300 that establishes the MBMS RAB between the radio network controller 300 and the serving GPRS support node 302.

Figure 3b is a flow diagram illustrating messaging between a serving GPRS support node 310 and a gateway GPRS support node 312 in accordance with the invention. The serving GPRS support node 310 notices a failure situation (314) e.g. that a radio access bearer, e.g. a GTP tunnel is no longer active.

If the MBMS radio access bearer is dropped, the serving GPRS support node 310 should also know that the MBMS service session still continues (i.e. the MBMS radio access bearer is not dropped because the MBMS data transmission is stopped). This requires that the gateway GPRS support node 312 informs the serving GPRS support node 310 in MBMS RAB Assignment Request (release RAB) what is the reason for dropping the MBMS RAB, e.g. failure situation or inactivity (e.g. MBMS data transmission stopped). If the MBMS radio access bearer is dropped, the serving GPRS support node 310 sends a MBMS RAB assignment request (316) to a default GGSN node or to a selected GGSN node. In response to the message, the gateway GPRS support node 312 sends an MBMS RAB Assignment Response (318) to the serving GPRS support node 310 that establishes the MBMS RAB (e.g. a GTP tunnel) between the serving GPRS support node 310 and the gateway GPRS support node 312.

The terms and signaling messages referring to a radio access bearer (RAB) in Figure 3b are only exemplary terms and messages. In another embodiment of Figure 3b, a radio access bearer actually refers to a GTP (GPRS tunneling protocol) tunnel, and correspondingly, establishment messages establishing a GTP tunnel refer e.g. to Create PDP (Packet Data Protocol) Context Request and Create PDP Context Response messages.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for establishing a bearer plane for a broadcast or multicast service session in a mobile telecommunication network comprising at least a first network node initiating a bearer plane establishment and a second network node receiving the bearer plane establishment from the first network node, the method comprising:
establishing a bearer plane between a first network node and a second network node for a broadcast or multicast service session;
detecting a failure with an established bearer plane ;
reselecting a second network node providing the broadcast or multicast service session; and
re-establishing the bearer plane with a selected second network node for continuing the broadcast or multicast service session.

2. The method according to claim 1, further comprising:
receiving a request from at least one second network node for establishing the bearer plane for the broadcast or multicast service session; and
reselecting one of the at least one second network node for establishing the bearer plane.

3. The method according to claim 2, further comprising:
reselecting a default second network node for establishing a bearer plane connection.

4. The method according to claim 2, further comprising:
storing addresses of the at least one second network node trying to establish the bearer plane for the broadcast or multicast service session.

5. The method according to claim 4, further comprising:
storing a broadcast or multicast service session identifier with the addresses of the at least one second network node trying to establish the bearer plane for the broadcast or multicast service session.

6. The method according to claim 5, wherein the step of storing comprises storing the addresses of the at least one second network node together with the broadcast or multicast service session identifier in the first network node.

7. The method according to claim 6, wherein the step of storing comprises storing the addresses with the broadcast or multicast service session identifier comprising an IP multicast address.

8. The method according to claim 1, further comprising:
sending a Multimedia Broadcast/Multicast Service radio access bearer re-establishment request to the selected second network node for re-establishing a radio access bearer;
sending a Multimedia Broadcast/Multicast Service radio access bearer assignment request to the first network node with the second network node in response to the Multimedia Broadcast/Multicast Service radio access bearer re-establishment request, and
sending a Multimedia Broadcast/Multicast Service radio access bearer assignment response to the second network node with the first network node.

9. The method according to claim 1, further comprising:
sending a Multimedia Broadcast/Multicast Service radio access bearer assignment request to the selected second network node for re-establishing the bearer plane; and
sending a Multimedia Broadcast/Multicast Service radio access bearer assignment response to the first network node with the second network node in response to a Multimedia Broadcast/Multicast Service radio access bearer re-establishment request.

10. The method according to claim 1, wherein the step of establishing comprises establishing the bear plane between the first network node comprising one of a radio network controller of a Universal Terrestrial Radio Access Network, a base station controller of the GSM Edge Radio Access Network or an IP base station of the IP Radio Access Network and the second network node comprising a serving General Packet Radio Service support node.

11. The method according to claim 1, wherein the step of establishing comprises establishing the bear plane between the first network node comprising a serving General Packet Radio Service support node and the second network node comprising a gateway General Packet Radio Service support node.

12. A system for establishing a bearer plane for a broadcast or multicast service session in a mobile telecommunication network comprising at least a first network node initiating a bearer plane establishment and a second network node receiving the bearer plane establishment from the first network node, the system comprising:
establishing means for establishing a bearer plane between a first network node and a second network node for a broadcast or multicast service session;
detecting means for detecting a failure with an established bearer plane;
reselecting means for reselecting a second network node providing the broadcast or multicast service session; and
re-establishing means for re-establishing the bearer plane with a selected second network node for continuing the broadcast or multicast service session.

13. The system according to claim 12, further comprising:
receiving means for receiving a request from at least one second network node for establishing the bearer plane for the broadcast or multicast service session; and wherein
the reselecting means are configured to reselect one of the at least one second network node.

14. The system according to claim 13, wherein the reselecting means are configured to select a default second nework node.

15. The system according to claim 12, further comprising:
storing means for storing addresses of the second nework nodes trying to establish the bearer plane for the broadcast or multicast service session.

16. The system according to claim 15, wherein the storing means are configured to store a broadcast or multicast service session identifier with the addresses of the second nework nodes trying to establish the bearer plane for the broadcast or multicast service session.

17. The system according to claim 16, wherein the broadcast or multicast service session identifier comprises an IP multicast address.

18. The system according to claim 12, wherein the re-establishing means are configured to send a Multimedia Broadcast/Multicast Service radio access bearer re-establishment request to the selected second network node for re-establishing the bearer plane.

19. The system according to claim 12, wherein the re-establishing means are configured to send a Multimedia Broadcast/Multicast Service radio access bearer assignment request to the selected second network node for re-establishing the bearer plane.

20. The system according to claim 12, wherein the first network node comprises one of a radio network controller of a Universal Terrestrial Radio Access Network, a base station controller of the GSM Edge Radio Access Network or an IP base station of the IP Radio Access Network and the second network node comprises a serving General Packet Radio Service support node.

21. The system according to claim 12, wherein the first network node comprises a serving General Packet Radio Service support node and the second network node comprises a gateway General Packet Radio Service support node.

22. A radio access network node for establishing a bearer plane for a broadcast or multicast service session in a mobile telecommunication network, wherein the radio access network node is connected to at least one serving General Packet Radio Service support node, the radio access network node comprising:
establishing means for establishing a bearer plane between a radio access network node and a serving General Packet Radio Service support node for a broadcast or multicast service session;
detecting means for detecting a failure with an established bearer plane;
reselecting means for reselecting serving General Packet Radio Service support nodes providing the broadcast or multicast service session; and
re-establishing means for re-establishing the bearer plane with a selected serving General Packet Radio Service support node for continuing the broadcast or multicast service session.

23. The radio access network node according to claim 22, wherein the radio access network node further comprises receiving means for receiving a request from at least one serving General Packet Radio Service support node for establishing the bearer plane for the broadcast or multicast service session; and wherein the reselecting means are configured to reselect one of the serving General Packet Radio Service support nodes.

24. The radio access network node according to claim 23, wherein the reselecting means for selecting are configured to select a default serving GPRS support node.

25. The radio access network node according to claim 22, wherein the radio access network node further comprises storing means for storing addresses of the serving General Packet Radio Service support nodes trying to establish the bearer plane for the broadcast or multicast service session.

26. The radio access network node according to claim 25, wherein the storing means are configured to store a broadcast or multicast service session identifier with the addresses of the serving General Packet Radio Service support nodes trying to establish the bearer plane for the broadcast or multicast service session.

27. The radio access network node according to claim 26, wherein the broadcast or multicast service session identifier comprises an IP multicast address.

28. The radio access network node according to claim 22, wherein re-establishing means are configured to send a Multimedia Broadcast/Multicast Service radio access bearer re-establishment request to the selected serving General Packet Radio Service support node for re-establishing a radio access bearer.

29. The radio access network node according to claim 22, wherein the re-establishing means are configured to send a Multimedia Broadcast/Multicast Service radio access bearer assignment request to the selected serving GPRS support node for re-establishing a radio access bearer.

30. The radio access network node according to claim 22, wherein the radio access network node comprises one of a radio network controller of a Universal Terrestrial Radio Access Network, a base station controller of a GSM Edge Radio Access Network, a base station system of the GSM or an IP base station of the IP Radio Access Network.

31. A serving General Packet Radio Service support node for establishing a bearer plane for a broadcast or multicast service session in a mobile telecommunication network, wherein the serving General Packet Radio Service support node is connected to at least one gateway General Packet Radio Service support node, the serving General Packet Radio Service support node comprising:
establishing means for establishing a bearer plane between a serving General Packet Radio Service support node and a gateway GPRS support node for a broadcast or multicast service session;
detecting means for detecting a failure with an established bearer plane;
reselecting means for reselecting gateway General Packet Radio Service support nodes providing the broadcast or multicast service session; and
re-establishing means for re-establishing the bearer plane with a selected gateway General Packet Radio Service support node for continuing the broadcast or multicast service session.

32. The serving General Packet Radio Service support node according to claim 31, wherein the serving General Packet Radio Service support node further comprises:
receiving means for receiving a request from at least one gateway General Packet Radio Service support node for establishing the bearer plane for the broadcast or multicast service session; and wherein
the reselecting means are configured to reselect one of the gateway General Packet Radio Service support nodes.

33. The serving General Packet Radio Service support node according to claim 23, wherein the reselecting means for selecting are configured to select a default gateway General Packet Radio Service support node.

34. The serving General Packet Radio Service support node according to claim 31, wherein the serving General Packet Radio Service support node further comprises storing means for storing addresses of the gateway General Packet Radio Service support nodes trying to establish the bearer plane for the broadcast or multicast service session.

35. The serving General Packet Radio Service support node according to claim 34, wherein the storing means are configured to store a broadcast or multicast service session identifier with the addresses of the gateway General Packet Radio Service support nodes trying to establish the bearer plane for the broadcast or multicast service session.

36. The serving General Packet Radio Service support node according to claim 35, wherein the broadcast or multicast service session identifier comprises an IP multicast address.

37. The serving General Packet Radio Service support node according to claim 31, wherein the re-establishing means are configured to send an Multimedia Broadcast/Multicast Service radio access bearer re-establishment request to the selected gateway General Packet Radio Service support node for re-establishing the bearer plane.

38. The serving General Packet Radio Service support node according to claim 31, wherein the re-establishing means are configured to send a Multimedia Broadcast/Multicast Service radio access bearer assignment request to the selected gateway General Packet Radio Service support node for re-establishing the bearer plane.
